# FASCICULE DE BREVET EUROPEEN

(11) **EP 2 697 849 B1**
(45) Date de publication et mention de la délivrance du brevet: **03.06.2015**
(21) Numéro de dépôt: 12714007.7
(22) Date de dépôt: 13.04.2012
(51) Int. Cl.: H01M 2/40, H01M 6/34, F04D 29/44, F42B 19/00, H01M 2/34

(54) **ENGIN SOUS-MARIN COMPRENANT UNE PILE ÉLECTROCHIMIQUE ACTIVÉE PAR ÉLECTROLYTE**
UNTERWASSERFAHRZEUG MIT ELEKTROLYTISCH AKTIVIERTER BATTERIEZELLE
UNDERWATER VEHICLE COMPRISING AN ELECTROLYTICALLY ACTIVATED ELECTROCHEMICAL BATTERY

(30) Priorité: 15.04.2011 FR 1101191
(43) Date de publication de la demande: 19.02.2014
(73) Titulaire: DCNS, 75015 Paris (FR)
(72) Inventeur: GERLIER, François, F-13014 Marseille (FR); SENEZ, Thomas, F-83120 Sainte-Maxime (FR); LEMASQUERIER, Alexandre, F-14400 Bayeux (FR)
(74) Mandataire: Domenego, Bertrand
(86) Numéro de dépôt international: PCT/EP2012/056826
(87) Numéro de publication internationale: WO 2012/140227

(56) Documents cités:
- EP-A1- 0 307 292
- US-A- 5 506 065
- US-A- 5 532 079

## Description

La présente invention concerne un engin sous-marin tel que notamment une torpille.

De tels engins sous-marin formés par exemple par une torpille telle qu'une torpille dite torpille « lourde », comprennent une pile électrochimique activée par électrolyte et qui est destinée à produire de l'énergie électrique d'alimentation du reste de l'engin pour son fonctionnement, sa motorisation...

De tels moyens d'alimentation en énergie électrique de ce type d'engins sont déjà connus dans l'état de la technique.

Ainsi par exemple on pourra se reporter au document EP A 0307292, qui décrit un dispositif pour former et faire circuler un électrolyte liquide dans une pile alcaline amorçable pour ce type d'applications.

En fait dans ce document, la pile électrochimique comprend une cellule électrochimique de production de l'énergie électrique, un réservoir destiné à contenir l'électrolyte et des moyens de mise en circulation de l'électrolyte entre la cellule électrochimique et le réservoir, ces moyens de mise en circulation comprenant une pompe.

De façon classique également, les pompes utilisées peuvent être des pompes hélico-centrifuges disposées axialement dans le réservoir et comprenant une roue à aubes motorisée et associée par exemple à un moteur électrique d'entraînement, cette roue à aubes étant montée rotative dans un diffuseur.

D'autres types de pompes comme par exemple des pompes à palettes ou autres ont également été proposées pour ce type d'applications.

Cependant toutes les solutions proposées présentent un certain nombre d'inconvénients notamment au niveau de la discrétion acoustique de l'engin.

On sait en effet que l'une des caractéristiques de fonctionnement importantes de ce type d'engins, en particulier lorsque ceux-ci sont constitués par des armes telles que des torpilles, est leur capacité à être discrets en particulier au point de vue acoustique afin d'être détectés le plus tard possible par des moyens de détection acoustiques correspondants d'une éventuelle cible.

Le but de l'invention est donc de résoudre ces problèmes en améliorant la discrétion acoustique de tels engins.

A cet effet l'invention a pour objet un engin sous-marin comportant une pile électrochimique activée par électrolyte destinée à produire de l'énergie électrique d'alimentation de celui-ci, la pile électrochimique comportant :
- une cellule électrochimique de production de l'énergie électrique,
- un réservoir destiné à contenir l'électrolyte,
- des moyens de mise en circulation de l'électrolyte entre la cellule électrochimique et le réservoir, ces moyens de mise en circulation comprenant une pompe hélico-centrifuge disposée axialement dans le réservoir et comprenant une roue motorisée montée rotative dans un diffuseur, caractérisé en ce que le diffuseur présente une forme générale en dôme de refoulement du flux d'électrolyte en sortie de la pompe dans une direction sensiblement parallèle à l'axe de la pompe et donc du réservoir.

Selon d'autres caractéristiques de cet engin, prises seules ou en combinaison :
- la roue de la pompe est une roue non axisymétrique ;
- une portion au moins de la face interne du diffuseur comporte des aubes d'axes décalés par rapport à l'axe de la pompe ;
- le diffuseur est adapté pour refouler l'électrolyte en sortie de la pompe sur 360° autour de l'axe de celle-ci ; et
- il est formé par une torpille.

L'invention sera mieux comprise à l'aide de la description qui va suivre, donnée uniquement à titre d'exemple et fait en se référant aux dessins annexés sur lesquels :
- la figure 1 représente un schéma synoptique illustrant la structure générale d'une section de pile électrochimique entrant dans la constitution d'un engin sous-marin selon l'invention ;
- la figure 2 représente une vue de côté en coupe d'une pompe hélico-centrifuge entrant dans la constitution d'un tel engin ;
- la figure 3 représente une vue partielle éclatée et en coupe d'une roue et d'un diffuseur entrant dans la constitution d'une telle pompe ; et
- la figure 4 représente une vue en perspective de côté et partielle d'un diffuseur entrant dans la constitution d'une telle pompe.

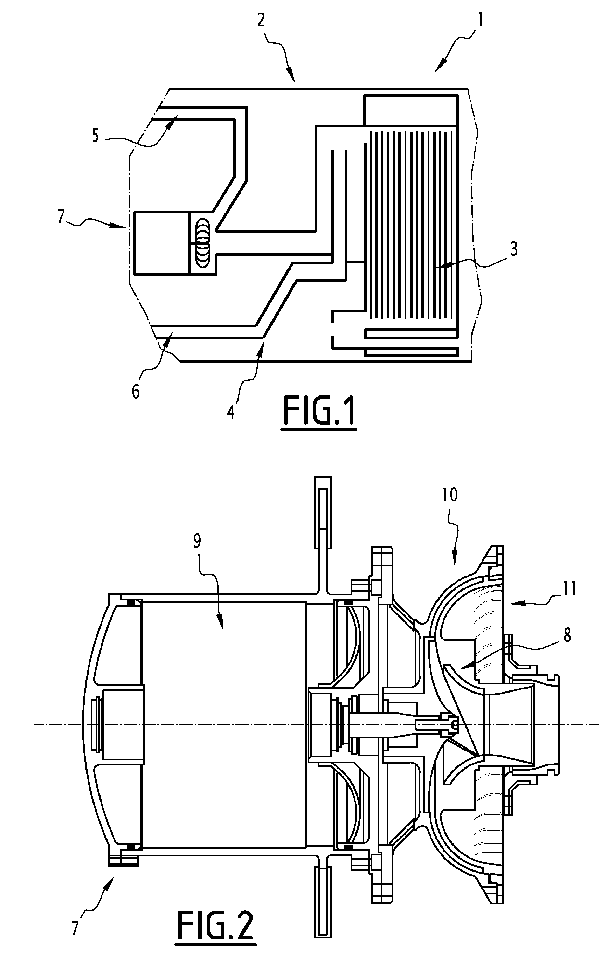

On a en effet illustré sur ces figures et en particulier sur la figure 1, une portion d'un engin sous-marin désigné par la référence générale 1, et constitué par exemple par une torpille dite « lourde ».

La portion illustrée plus particulièrement de cet engin, est la partie appelée section « pile » 2 d'un tel engin.

De façon classique et comme cela a été décrit dans le document antérieur mentionné précédemment, cette pile est une pile électrochimique activée par électrolyte et destinée à produire de l'énergie électrique d'alimentation du reste de l'engin pour son fonctionnement, sa motorisation,...

Cette pile électrochimique comprend alors une cellule électrochimique de production de l'énergie électrique désignée par la référence générale 3 sur cette figure 1, associée à un réservoir destiné à contenir l'électrolyte, ce réservoir étant désigné par la référence générale 4.

Ce réservoir et le reste de l'engin sont par exemple cylindriques.

L'électrolyte peut se présenter sous une forme liquide ou anhydre, la section pile comportant alors dans ce dernier cas, de façon classique, un conduit d'amenée d'eau de mer propre à amener de l'eau de mer dans le réservoir de manière à dissoudre l'électrolyte sous forme anhydre afin de former un électrolyte liquide, lors de l'amorçage de celle-ci.

Sur cette figure 1, ces moyens d'amenée d'eau de mer sont formés par un conduit désigné par la référence générale 5.

Par ailleurs et de façon classique également, un conduit d'évacuation des gaz issus de la cellule électrochimique peut également être prévu, ce conduit étant désigné par la référence générale 6.

Ce dégazage étant classique et mettant en oeuvre des moyens de dégazage de type classique, il ne sera pas décrit plus en détails par la suite.

Enfin, il est également prévu dans cette section, des moyens de mise en circulation de l'électrolyte entre la cellule électrochimique et le réservoir, ces moyens étant désignés par la référence générale 7 sur cette figure 1.

Cette circulation permet de contrôler le fonctionnement et notamment de maîtriser la température de la cellule électrochimique comme décrit dans le document EP cité précédemment.

Ces moyens de mise circulation de l'électrolyte entre la cellule électrochimique et le réservoir sont formés par une pompe hélico-centrifuge disposée axialement dans le réservoir et par exemple dont l'entrée est raccordée à la cellule et dont la sortie est raccordée au réservoir.

Cette pompe comporte alors de façon classique, une roue à aubes motorisée associée par exemple à un moteur électrique et montée rotative dans un diffuseur.

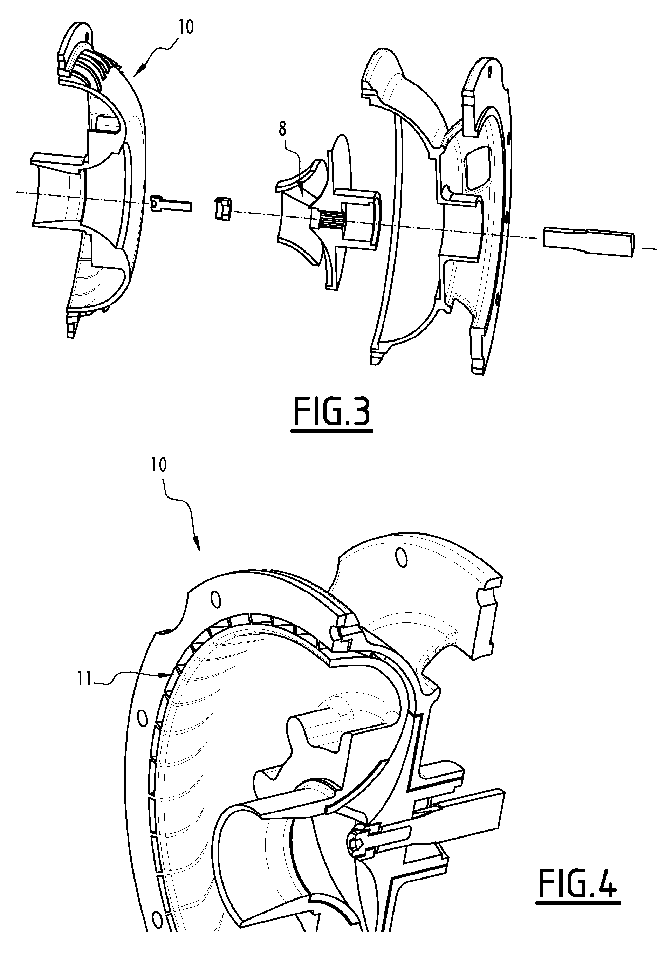

Cette pompe hélico-centrifuge 7 est illustrée plus en détails sur les figures 2, 3 et 4.

On reconnaît en effet sur ces figures et en particulier sur la figure 2, les moyens de mise en circulation de l'électrolyte désignés par la référence générale 7.

Comme cela a été indiqué précédemment, ces moyens de mise en circulation comportent une pompe hélico-centrifuge comportant une roue motorisée désignée par la référence générale 8 sur ces figures et associée par exemple à un moteur électrique désigné par la référence générale 9, de manière à ce que la roue tourne dans le diffuseur désigné par la référence générale 10.

Selon une caractéristique, la roue à aubes utilisée pour la pompe hélico-centrifuge est une roue non axisymétrique.

Ceci présente un certain nombre d'avantages notamment en matière de discrétion acoustique de l'engin sous-marin.

En effet, l'utilisation d'une roue non axisymétrique permet d'élargir la plage de fréquences de signature de fonctionnement de la pompe et de réduire l'amplitude de l'énergie acoustique rayonnée lors du fonctionnement de celle-ci.

On conçoit alors qu'en réduisant cette amplitude, on améliore la discrétion de l'engin et on rend sa détection plus difficile.

Différentes formes de roue peuvent alors être envisagées pour correspondre à ces besoins.

De même le diffuseur 10 présente une forme particulière permettant également d'améliorer la discrétion acoustique de l'engin.

En fait et comme cela est illustré sur ces différentes figures 2 à 4, le diffuseur 10 présente la forme générale d'un dôme de refoulement du flux d'électrolyte en sortie de la pompe dans une direction sensiblement parallèle à l'axe de cette pompe et du réservoir.

En effet l'électrolyte est pompé axialement en entrée par la pompe et refoulé radialement en sortie vers le diffuseur dont la forme en dôme permet de dévier le flux d'électrolyte afin qu'il ne se dirige plus radialement vers la paroi du réservoir mais axialement dans celui-ci en direction de la cellule.

Ceci permet alors de réduire le phénomène de « pont ou colonne acoustique » créé entre la pompe et la paroi du réservoir de l'engin sous-marin par le flux d'électrolyte en sortie de la pompe et se traduit également par une réduction du bruit rayonné par l'engin et donc par une amélioration de sa discrétion.

On notera également qu'au moins une portion de la face interne de ce diffuseur 10 peut être munie d'aubes par exemple 11, d'axes décalés par rapport à l'axe de cette pompe afin de mettre en rotation le flux d'électrolyte en sortie de la pompe, autour de l'axe de celle-ci, dans le même but que celui précité de réduction de la propagation acoustique des bruits de fonctionnement de celle-ci.

Dans l'exemple de réalisation décrit, le dôme permet également d'assurer une répartition du flux de refoulement d'électrolyte sur 360° autour de l'axe de la pompe, celui-ci étant disposé symétriquement autour de l'axe de la pompe et du réservoir.

Ceci permet également d'améliorer l'efficacité de la circulation d'électrolyte et donc de façon générale le fonctionnement de la pile électrochimique.

Il va de soi bien entendu que d'autres modes de réalisation encore peuvent être envisagés.

## Revendications

1. Engin sous-marin comportant une pile électrochimique activée par électrolyte destinée à produire de l'énergie électrique d'alimentation de celui-ci, la pile électrochimique comportant :
- une cellule électrochimique (3) de production de l'énergie électrique,
- un réservoir (4) destiné à contenir l'électrolyte,
- des moyens (7) de mise en circulation de l'électrolyte entre la cellule électrochimique (3) et le réservoir (4), ces moyens de mise en circulation comprenant une pompe hélico-centrifuge (7) disposée axialement dans le réservoir (4) et comprenant une roue motorisée (8) montée rotative dans un diffuseur (10), **caractérisé en ce que** le diffuseur (10) présente une forme générale en dôme de refoulement du flux d'électrolyte en sortie de la pompe dans une direction sensiblement parallèle à l'axe de la pompe et donc du réservoir.

2. Engin sous-marin selon la revendication 1, **caractérisé en ce que** la roue de la pompe est une roue non axisymétrique.

3. Engin sous-marin selon la revendication 1 ou 2, **caractérisé en ce qu'**une portion au moins de la face interne du diffuseur (10) comporte des aubes (11) d'axes décalés par rapport à l'axe de la pompe.

4. Engin sous-marin selon la revendication 1, 2 ou 3, **caractérisé en ce que** le diffuseur (10) est adapté pour refouler l'électrolyte en sortie de la pompe sur 360° autour de l'axe de celle-ci.

5. Engin sous-marin selon l'une quelconque des revendications précédentes, **caractérisé en ce qu'**il est formé par une torpille.

## Patentansprüche

1. Unterwassergerät, welches eine elektrochemische Batterie aufweist, die von einem Elektrolyt aktiviert wird und die zur Erzeugung von elektrischer Versorgungsenergie von ihm bestimmt ist, wobei die elektrochemische Batterie aufweist:
- eine elektrochemische Zelle (3) zur Erzeugung der elektrischen Energie,
- ein Reservoir (4), welches bestimmt ist, um das Elektrolyt zu enthalten,
- Mittel (7) zum Zirkulieren des Elektrolyts zwischen der elektrochemischen Zelle (3) und dem Reservoir (4), wobei diese Mittel zum Zirkulieren eine Spiral-Kreisel-Pumpe (7) aufweisen, welche axial innerhalb des Reservoirs (4) angeordnet ist und ein motorisiertes Laufrad (8) aufweist, das drehbar innerhalb eines Diffusors (10) angeordnet ist, **dadurch gekennzeichnet, dass** der Diffusor (10) im Allgemeinen die Form einer Kuppel hat zum Fördern des Elektrolytflusses am Ausgang der Pumpe in einer Richtung, welche im Wesentlichen parallel zur Achse der Pumpe und folglich zum Reservoir ist.

2. Unterwassergerät gemäß Anspruch 1, **dadurch gekennzeichnet, dass** das Laufrad der Pumpe ein nicht axialsymmetrisches Laufrad ist.

3. Unterwassergerät gemäß Anspruch 1 oder 2, **dadurch gekennzeichnet, dass** ein Abschnitt von zumindest der Innenseite des Diffusors (10) Schaufeln (11) aufweist, mit Achsen, die mit Bezug auf die Pumpenachse schräg sind.

4. Unterwassergerät gemäß Anspruch 1, 2 oder 3, **dadurch gekennzeichnet, dass** der Diffusor (10) angepasst ist, um das Elektrolyt am Ausgang der Pumpe über 360° um die Achse von dieser herum zu fördern.

5. Unterwassergerät gemäß irgendeinem der vorhergehenden Ansprüche, **dadurch gekennzeichnet, dass** es von einem Torpedo gebildet ist.

## Claims

1. Underwater vehicle including an electrolyte-activated electrochemical fuel cell devoted to supply said underwater vehicle with electrical power, which fuel cell includes:
- an electrochemical power production cell (3),
- a reservoir (4) to contain the electrolyte.
- means of circulation (7) of the electrolyte between the electrochemical cell (3) and the reservoir (4), comprising a semi-axial flow pump (7) arranged axially in the reservoir (4) and comprising a motorised wheel (8) rotatably mounted in a diffuser (10), **characterised in that** the diffuser (10) has the general shape of a dome to direct the flow of the electrolyte coming out of the pump in a direction substantially parallel to the axis of the pump, and thus of the reservoir.

2. Underwater vehicle according to claim 1, **characterised in that** the wheel of the pump is a non-axisymmetric wheel.

3. Underwater vehicle according to claim 1 or 2, **characterised in that** at least one portion of the inner surface of the diffuser (10) includes paddles (11) with axes that are offset from the axis of the pump.

4. Underwater vehicle according to claim 1, 2, or 3, **characterised in that** the diffuser (10) is suited to direct the electrolyte exiting the pump 360° around the axis of the pump.

5. Underwater vehicle according to any of the foregoing claims, **characterised in that** it consists of a torpedo.
